## Europäisches Patentamt
## European Patent Office
## Office européen des brevets

(19)

(11) Numéro de publication: **0 169 091**
**B1**

(12) **FASCICULE DE BREVET EUROPEEN**

(45) Date de publication du fascicule du brevet:
09.03.88

(21) Numéro de dépôt: **85401008.9**

(22) Date de dépôt: **22.05.85**

(51) Int. Cl.⁴: **F 16 D 3/20**

(54) **Perfectionnements apportés aux joints universels coulissants.**

(30) Priorité: **21.06.84 FR 8410088**

(43) Date de publication de la demande:
**22.01.86 Bulletin 86/4**

(45) Mention de la délivrance du brevet:
**09.03.88 Bulletin 88/10**

(84) Etats contractants désignés:
**DE GB IT SE**

(56) Documents cités:
**EP - A - 0 011 010**
**DE - A - 2 927 648**
**FR - A - 2 278 011**
**FR - A - 2 454 015**
**FR - A - 2 474 120**
**GB - A - 2 000 573**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Guerlet, Bernard Guislain, 3, Place des Marronniers Oissery, F-77178 St. Pathus (FR)**

(74) Mandataire: **Boivin, Claude, 9, rue Edouard-Charton, F-78000 Versailles (FR)**

ACTORUM AG

**Description**

La présente invention concerne les joints universels coulissants qui comprennent un élément d'entraînement, sensiblement en forme de bol, solidaire d'un arbre menant et présentant au moins deux chemins de roulement coopérant avec des galets montés à rotation sur des tourillons d'un moyeu solidaire d'un arbre mené.

Il est connu de prévoir des moyens d'arrêt, à l'extrémité ouverte de l'élément d'entraînement, pour retenir l'élément entraîné, à savoir les galets et l'extrémité de l'arbre mené, à l'intérieur de cet élément d'entraînement. Le document FR-A-2 439 904 (& EP-A-11010) montre des moyens d'arrêt de ce genre qui sont agencés de manière telle que lorsqu'un galet est en appui contre ces moyens, une partie de ce galet se trouve à l'extérieur de l'élément d'entraînement tandis que le centre du galet ainsi retenu se trouve au voisinage de l'extrémité ouverte de cet élément.

Les joints universels coulissants du type ci-dessus présentent des difficultés de manipulations, notamment lors du montage. En effet, les galets risquent très facilement de s'échapper de leur tourillon lorsqu'ils ne sont pas montés dans l'élément d'entraînement. Les documents FR-A-2 474 120 et FR-A-2 454 015 ont pour objet des moyens permettant la retenue des galets sur leur tourillon lors des manutentions et qui remédient ainsi à cet inconvénient.

La présente invention a pour objet un joint universel coulissant dans lequel les moyens d'arrêt et les moyens de retenue des galets sur leur tourillon sont constitués par une seule et même pièce, ce qui simplifie la fabrication et diminue la quantité de matière nécessaire.

Ce joint universel coulissant est caractérisé en ce que les moyens d'arrêt de l'élément entraîné et les moyens de retenue des galets sur leur tourillon sont constitués par un manchon qui peut être fixé sur l'extrémité ouverte de l'élément d'entraînement, en formant butée pour l'extrémité supérieure des tourillons, et est muni de protubérances dirigées vers l'intérieur du manchon et pouvant chacune s'engager dans une cavité prévue à l'extrémité supérieure de chacun des tourillons.

Le manchon peut être solidaire de languettes, en nombre égal à celui des galets, qui sont espacés angulairement de manière régulière, et dont chacune forme butée pour l'extrémité supérieure de l'un des tourillons et est munie de l'une des protubérances. Ces languettes peuvent constituer des prolongements repliés du manchon.

L'extrémité de chaque languette peut comporter une encoche dans laquelle peut se loger l'extrémité supérieure du tourillon.

L'extrémité du manchon opposée aux replis des languettes peut comporter une nervure ou une rainure circulaire propre à s'engager respectivement dans une rainure ou sur un rebord formé à l'extrémité ouverte de l'élément d'entraînement.

On a décrit ci-après, à titre d'exemple non limitatif, un mode de réalisation d'un joint universel coulissant selon l'invention, avec référence au dessin annexé dans lequel:

La Figure 1 est une vue en coupe axiale du joint;

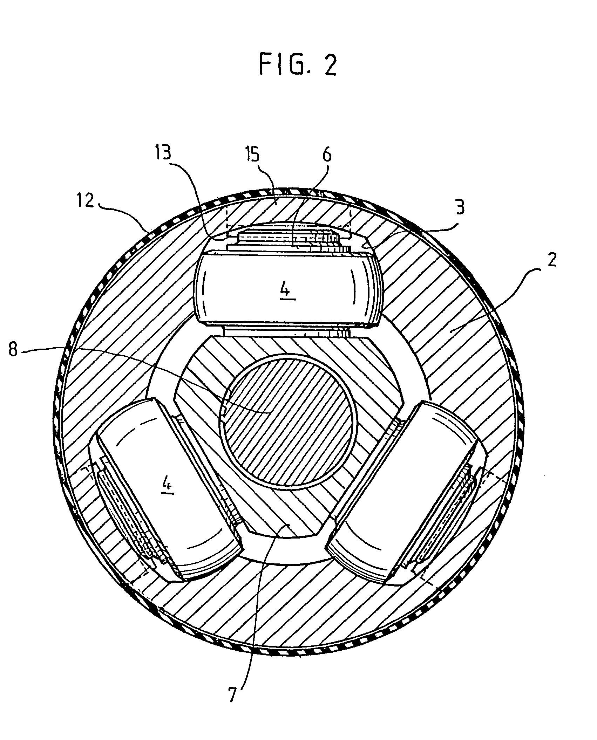

La Figure 2 en est une coupe transversale suivant II-II de la Figure 1;
La Figure 3 montre en coupe axiale l'élément entraîné non monté dans l'élément d'entraînement.

Tel qu'il est représenté au dessin, le joint universel coulissant est du type tripode et comporte un arbre menant 1 qui est solidaire d'un élément d'entraînement 2, sensiblement en forme de bol. Cet élément présente trois chemins de roulement 3, sensiblement parallèles à l'axe de l'arbre 1 et régulièrement espacés de 120°. Ces chemins de roulement sont formés par des gorges ayant leurs flancs limités par des surfaces concaves cylindriques dont les génératrices sont sensiblement parallèles à l'axe de l'arbre 1 et dont la concavité est tournée vers le chemin de roulement 3.

Chaque chemin de roulement 3 coopère avec un galet 4 qui est en forme de segment sphérique, monté à rotation par l'intermédiaire d'un palier à aiguilles 5 sur un tourillon radial 6 d'un moyeu 7 solidaire d'un arbre mené 8. Des moyens élastiques 9, constitués par exemple par un ressort hélicoïdal, sont interposés entre le fond de l'élément d'entraînement et une coupelle 10 en appui contre l'extrémité de l'arbre mené 8.

Il est prévu des moyens de retenue 11 d'une part pour maintenir les galets sur leur pivot lors des manutentions (Figure 3), et d'autre part pour arrêter l'élément entraîné, constitué par le moyeu 7, les pivots 6 et les galets 4, contre l'action des moyens élastiques 9, dans une position latérale dans laquelle le centre des galets 4 se trouve au voisinage de l'extrémité ouverte du bol 2, une partie des galets se trouvant ainsi à l'extérieur de ce bol. La longueur des chemins de roulement 3 est déterminée de manière à être juste suffisante pour assurer la course utile des galets.

Les moyens de retenue 11 sont constitués par un manchon en élastomère 12 qui est prolongé à l'une de ses extrémités par trois languettes 13 écartées angulairement de 120° et repliées vers l'intérieur, et dont le bord opposé aux languettes présente une rainure circulaire 14 propre à s'engager sur un rebord 15 formé à l'extrémité ouverte du bol 2.

Chacune des languettes 13 est munie d'une protubérance 16 dirigée vers l'intérieur du manchon et pouvant s'engager dans une cavité 17 réalisée à l'extrémité supérieure de chacun des tourillons 6. La distance entre le milieu de la protubérance 16 et l'extrémité 18 du bord replié des languettes 13 est notablement supérieure au rayon de la cavité 17; lorsque les protubérances 16 sont engagées dans les cavités 17, les languettes 13 maintiennent ainsi les galets 4 sur leur tourillon lors des opérations de manutention, comme le montre la Figure 3. Par ailleurs, chacune des languettes 13 présente, à son extrémité éloignée du bord replié 18, une encoche 19 contre laquelle peut venir buter l'extrémité supérieure 20 du tourillon 6 correspondant.

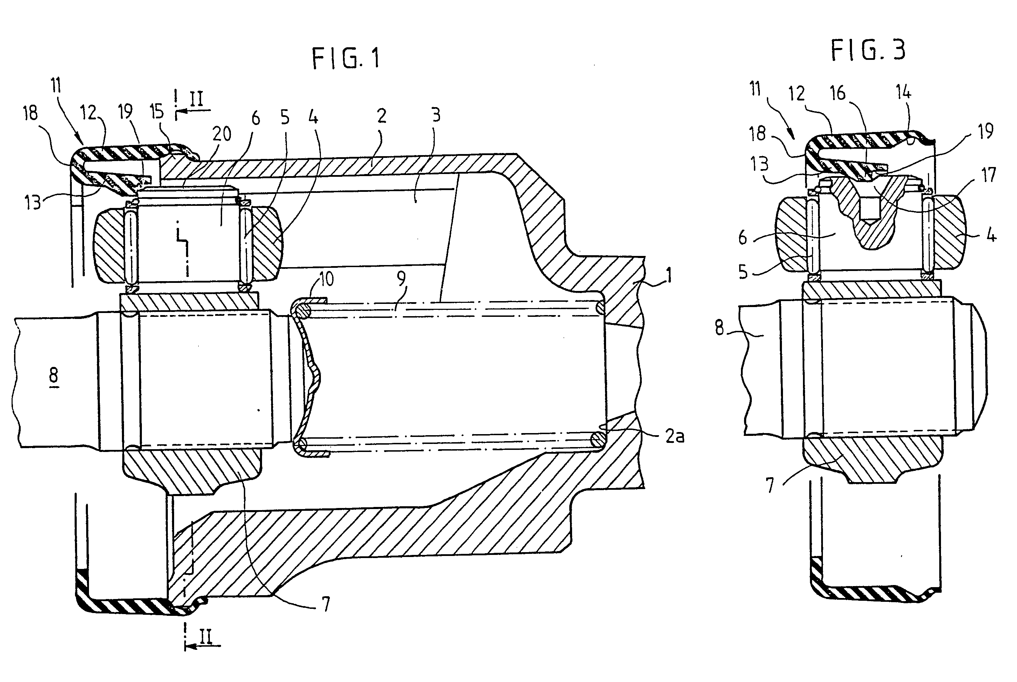

Lors du montage, on fixe le manchon 12 sur le bol 2 par engagement de la rainure 14 sur le rebord 15 de ce bol, et on déplace l'élément entraîné vers l'intérieur du bol de façon à dégager les protubérances 16 des cavités 17. Les languettes 13 forment alors butées pour l'élément entraîné et l'arrêtent dans sa position limite, comme le montre la Figure 1.

## Revendications

1. Joint universel coulissant comprenant un élément d'entraînement (2), sensiblement en forme de bol, solidaire d'un arbre menant (1) et présentant au moins deux chemins de roulement (3) coopérant avec des galets (4) montés à rotation sur des tourillons (6) d'un moyeu (7) solidaire d'un arbre mené (8), des moyens d'arrêt (11) pour retenir l'élément entraîné (7, 6, 4) à l'intérieur de l'élément d'entraînement (2), et des moyens de retenue (11) des galets (4) sur leur tourillon (6), quand l'élément entraîné (7, 6, 4) n'est pas monté à l'intérieur de l'élément d'entraînement (2), caractérisé en ce que les moyens d'arrêt (11) de l'élément entraîné (7, 6, 4) et les moyens de retenue (11) des galets (4) sur leur tourillon (6) sont constitués par un manchon (12) qui peut être fixé sur l'extrémité ouverte de l'élément d'entraînement (2) en formant butée pour l'extrémité supérieure des tourillons (6), et est muni de protubérances (16) dirigées vers l'intérieur du manchon (12) et pouvant chacune s'engager dans une cavité (17) prévue à l'extrémité supérieure de chacun des tourillons (6).

2. Joint selon la revendication 1, caractérisé en ce que le manchon (12) est solidaire de languettes (13), en nombre égal à celui des galets (4), qui sont espacées angulairement de manière régulière, et dont chacune forme butée pour l'extrémité supérieure de l'un des tourillons (6) et est munie de l'une des protubérances.

3. Joint selon la revendication 2, caractérisé en ce que les languettes (13) constituent des prolongements repliés du manchon (12).

4. Joint selon la revendication 2 ou 3, caractérisé en ce que l'extrémité de chaque languette (13) comporte une encoche (19) dans laquelle peut se loger l'extrémité supérieure du tourillon (6).

5. Joint selon la revendication 3 ou 4, caractérisé en ce que l'extrémité du manchon opposée aux replis (18) des languettes (13) comporte une nervure ou une rainure circulaire (14) propre à s'engager respectivement dans une rainure ou sur un rebord (15) formé à l'extrémité ouverte de l'élément d'entraînement (2).

## Patentansprüche

1. Teleskopisches Kreuzgelenk mit einem im wesentlichen schalenförmigen Antriebselement (2), das kraftschlüssig mit einer treibenden Welle (1) verbunden ist und mindestens zwei Rollenbahnen (3) aufweist, die mit Rollen (4) zusammenwirken, welche drehbar auf Achszapfen (6) einer Radnabe (7) angeordnet sind, die kraftschlüssig mit einer angetriebenen Welle (8) verbunden ist, mit Anschlagmitteln (11) zum Festhalten des angetriebenen Elementes (7, 6, 4) im Inneren des Antriebselementes (2) und Haltemitteln (11) für die Rollen (4) auf ihren Achszapfen (6), wenn das angetriebene Element (7, 6, 4) nicht im Inneren des Antriebselementes (2) montiert ist, dadurch gekennzeichnet, dass die Anschlagmittel (11) des angetriebenen Elementes (7, 6, 4) und die Haltemittel (11) für die Rollen (4) auf ihren Achszapfen (6) durch eine Muffe (12) gebildet werden, die am offenen Ende des Antriebselementes (2) befestigbar ist und ein Widerlager für das obere Ende der Achszapfen (6) bildet und mit in das Innere der Muffe (12) gerichteten Vorsprüngen (16) versehen ist, von denen jeder in eine am oberen Ende jedes Achszapfens (6) vorgesehene Aushöhlung (17) eingreifen kann.

2. Gelenk nach Anspruch 1, dadurch gekennzeichnet, dass die Muffe (12) kraftschlüssig mit Zungen (13) verbunden ist, deren Anzahl gleich der Anzahl der Rollen (4) ist, die in gleichmässigen Winkelabständen angeordnet sind und von denen jede einen Anschlag für das obere Ende eines der Achszapfen (6) bildet und mit einem der Vorsprünge versehen ist.

3. Gelenk nach Anspruch 2, dadurch gekennzeichnet, dass die Zungen (13) aus zurückgefalteten Verlängerungen der Muffe (12) bestehen.

4. Gelenk nach Anspruch 2 oder 3, dadurch gekennzeichnet, dass das Ende jeder Zunge (13) eine Einkerbung (19) aufweist, in welche das obere Ende des Achszapfens (6) eingreifen kann.

5. Gelenk nach Anspruch 3 oder 4, dadurch gekennzeichnet, dass das den Falten (18) der Zungen (13) gegenüberliegende Ende der Muffe eine kreisförmig ausgebildete Rippe oder Rinne (14) aufweist, die dazu geeignet ist, in jeweils eine Rinne oder auf eine Randleiste (15) einzugreifen, die am offenen Ende des Antriebselementes (2) ausgebildet ist.

## Claims

1. Universal sliding joint including a drive element (2) substantially in the form of a bowl, fast with a drive shaft (1) and having at least two ball-races (3) cooperating with rollers (4) mounted for rotation on journals (6) of a hub (7) secured to a driven shaft (8), check means (11) for retaining the driven element (7, 6, 4) inside the drive element (2) and means (11) for retaining the rollers (4) on their journal (6) when the driven element (7, 6, 4) is not mounted inside the drive element (2), characterized in that the means (11) for checking the driven element (7, 6, 4) and the means (11) for retaining the rollers (4) on their journal (6) are formed by a sleeve (12) which may be fixed on the open end of the drive element (2) so as to form a stop for the upper end of the journals (6), and is provided with protuberances (16) directed inwardly of the sleeve (12) and each adapted to engage in a cavity (17) provided at the upper end of each of the journals (6).

2. Joint according to claim 1, characterized in that the sleeve (12) has tongues (13) formed integrally therewith, in number equal to that of the rollers (4), which are spaced angularly evenly apart and each of which forms a stop for the upper end of one of the journals (6) and is provided with one of the protuberances.

3. Joint according to claim 2, characterized in that the tongues (13) form bent extensions of the sleeve (12).

4. Joint according to claim 2 or 3, characterized in that the end of each tongue (13) includes a notch (19) in which the upper end of the journal (6) may be engaged.

5. Joint according to claim 3 or 4, characterized in that the end of the sleeve opposite the bends (18) of the tongues (13) includes a circular rib or groove (14) adapted for engagement respectively in a groove or on a flange (15) formed at the open end of the drive element.

# FIG. 1

# FIG. 3

0 169 091

FIG. 2